# FASCICULE DE BREVET EUROPEEN

(11) **EP 1 000 813 B1**
(45) Date de publication et mention de la délivrance du brevet: **09.07.2003**
(21) Numéro de dépôt: 99402775.3
(22) Date de dépôt: 08.11.1999
(51) Int. Cl.: B60R 16/02

(54) **Faisceau de câblage pour système de climatisation de véhicules automobiles**
Kabelbaum für Kraftfahrzeugklimaanlage
Wire harness for vehicle air condition system

(30) Priorité: 12.11.1998 FR 9814207
(43) Date de publication de la demande: 17.05.2000
(73) Titulaire: VALEO LIAISONS ELECTRIQUES, 78190 Montigny Le Bretonneux (FR)
(72) Inventeur: Scrabalat, Philippe, 94230 Cachan (FR)
(74) Mandataire: Faber, Jean-Paul

(56) Documents cités:
- FR-A- 2 762 719
- US-A- 4 348 870

## Description

La présente invention se rapporte à un faisceau de câblage pour système de climatisation de véhicules automobiles.

Un faisceau de câblage de véhicule automobile comprend généralement un certain nombre de sondes thermiques destinées à mesurer la température à des emplacements désirés, un calculateur relié aux sondes et destiné à recevoir les informations de celles-ci et au moins un moteur élec-trique pour commander différentes fonctions et notamment l'ouverture et la fermeture de volets pour l'admission d'air froid ou chaud dans l'habitacle.

Généralement, ces sondes sont mises en place et comportent des éléments de boîtiers de connecteurs, le faisceau de câblage comportant les éléments complémentaires de boîtiers de connecteurs.

Une telle disposition présente un certain nombre d'inconvénients.

Le nombre de connecteurs nécessaires est important ce qui engendre un coût élevé, soit le prix de ces connecteurs, la main d'oeuvre pour faire leur montage, etc...

De plus, ces connecteurs entraînent un nombre important de points de coupures électriques, ce qui risque d'entraîner les défaillances des connexions.

Le brevet US n° 4 348 870 propose de réaliser une sonde pour un dispositif d'air conditionné dans lequel la sonde est surmoulée et logée directement entre les cloisons de l'évaporateur.

Une telle disposition permet de protéger la sonde mais ne permet pas de supprimer certaines connexions qui peuvent perturber les organes les plus sensibles notamment les sondes thermiques.

L'un des buts de l'invention est de remédier à ces divers inconvénients.

Le faisceau, selon l'invention, est du type comprenant un certain nombre de conducteurs destinés à être reliés à une série de sondes thermiques, au moins à un moteur électrique et à un calculateur, les sondes thermiques étant directement reliées aux conducteurs correspondants du faisceau et solidarisées à ceux-ci par surmoulage, et aussi le moteur électrique est directement relié aux conducteurs correspondants du faisceau et solidarisé à ceux-ci par surmoulage.

Grâce à cette disposition, on obtient une réduction sensible des coûts et la diminution très sensible des points de coupures électriques permet d'éviter les chutes de tension et ainsi de réaliser une installation beaucoup plus fiable.

Suivant une autre caractéristique, le calculateur est directement relié aux conducteurs correspondants du faisceau et solidarisé à ceux-ci par surmoulage.

L'invention va maintenant être décrite avec plus de détails en se référant à des modes de réalisation particuliers donnés à titre d'exemple seulement et représentés aux dessins annexés, dans lesquels :
Figure 1 montre un faisceau de câblage, selon l'invention, suivant un premier mode de réalisation.
Figure 2 montre une variante du faisceau de câblage, selon l'invention.

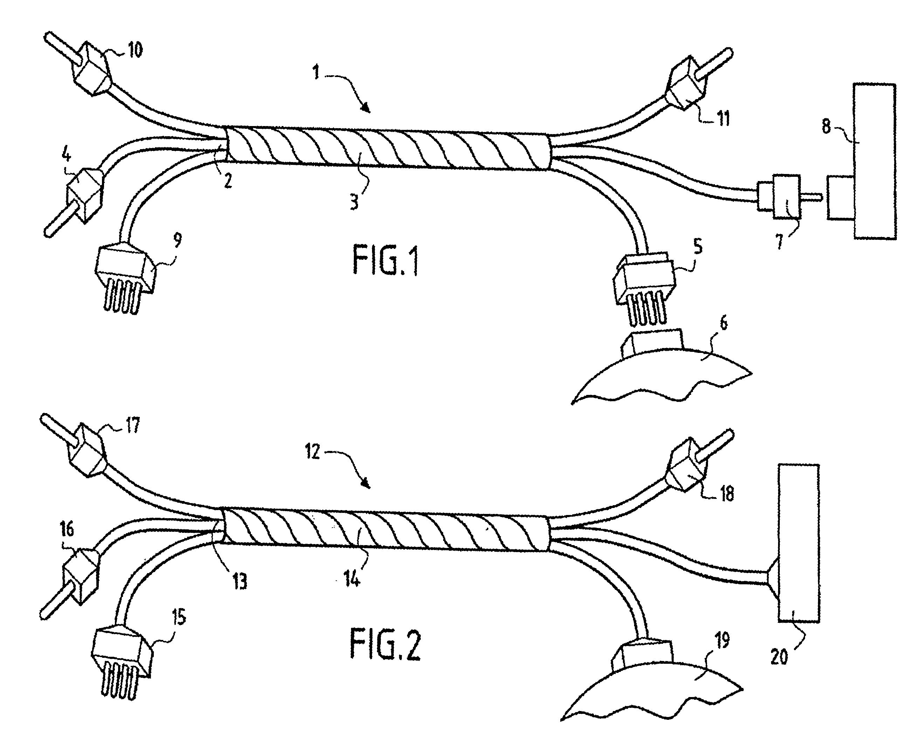

A la figure 1, on a représenté un faisceau de câblage désigné dans son ensemble par la référence 1 et comprenant un certain nombre de conducteurs 2 serrés entre eux par un ruban adhésif 3.

Le faisceau comprend une prise 4 destinée à être reliée à une source de courant électrique, un connecteur 5 pour l'alimentation d'un moteur électrique 6, un connecteur 7 destiné à être relié à un calculateur 8.

Dans le mode de réalisation, il est prévu trois sondes thermiques 9, 10 et 11, ces sondes étant directement reliées aux conducteurs correspondants, la liaison avec ceux-ci étant réalisée par un surmoulage.

La figure 2 montre une variante de réalisation.

La référence 12 désigne un faisceau de câblage avec un certain nombre de conducteurs 13 sur lesquels est enroulé un ruban adhésif 14.

A partir de ce faisceau s'étendent des conducteurs solidaires d'une prise 15 destinée à être reliée à une source de courant électrique pour l'alimentation des différents organes.

Comme dans la réalisation précédente, il est prévu trois sondes thermiques 16, 17 et 18 qui sont directement montées aux extrémités correspondantes des conducteurs correspondants et qui sont solidarisées avec ces derniers par un surmoulage.

Dans cette variante de réalisation, les conducteurs d'alimentation du moteur 19 sont directement montés sur celui-ci et fixés par un surmoulage.

Le calculateur 20 est relié directement aux conducteurs correspondants et un surmoulage est réalisé pour assurer leur assujettissement.

Grâce à cette disposition, les points de coupure des circuits électriques sont supprimés et on est assuré du fonctionnement des organes sensibles.

## Revendications

1. Faisceau de câblage pour système de climatisation de véhicules automobiles comprenant un certain nombre de conducteurs (2) destinés à être reliés à une série de sondes thermiques (9, 10, 11), au moins à un moteur électrique (6) et à un calculateur (8), lesdites sondes thermiques (9, 10, 11) étant directement reliées aux conducteurs correspondants du faisceau (1) et solidarisées à ceux-ci par surmoulage, **caractérisé en ce que** le moteur électrique (19) est directement relié aux conducteurs correspondants du faisceau et solidarisé à ceux-ci par surmoulage.

2. Faisceau de câblage pour système de climatisation de véhicules automobiles, selon la revendication 1, **caractérisé en ce que** le calculateur (20) est également directement relié aux conducteurs correspondants du faisceau et solidarisé à ceux-ci par surmoulage.

## Patentansprüche

1. Kabelbaum für Klimaanlagen von Kraftfahrzeugen, mit einer gewissen Anzahl von Leitern (2), die dazu vorgesehen sind, mit einer Reihe von Wärmefühlern (9, 10, 11), zumindest einem Elektromotor (6) und einem Rechner (8) verbunden zu werden, welch genannte Wärmefühler (9, 10, 11) unmittelbar mit entsprechenden Leitern des Kabelbaums (1) verbunden sind und an diesen durch Angießen befestigt sind, **dadurch gekennzeichnet, dass** der Elektromotor (19) mit den entsprechenden Leitern des Kabelbaumes unmittelbar verbunden und an diesen durch Angießen befestigt ist.

2. Kabelbaum für Klimaanlagen von Kraftfahrzeugen nach Anspruch 1, **dadurch gekennzeichnet, dass** der Rechner (20) ebenfalls mit den entsprechenden Leitern des Kabelbaumes unmittelbar verbunden und an diesen durch Angießen befestigt ist.

## Claims

1. A wire harness for vehicle air conditioning system comprising a certain number of conductors (2) intended to be connected to a series of thermic sensors (9,10,11), at least an electric motor (6) and a computing machine (8), said thermic sensors being directly connected to corresponding conductors of the wire harness (1) and joined together with this latter by duplicate moulding, **characterised in that** the electric motor (19) is directly connected to corresponding conductors of the wire harness and joined together with this latter by duplicate moulding.

2. A wire harness for vehicle air conditioning system according to claim 1, **characterised in that** the computing machine (20) is likewise directly connected to corresponding conductors of the wire harness and joined together with this latter by duplicate moulding.
